# EUROPEAN PATENT APPLICATION

(11) **EP 2 292 452 A1**
(43) Date of publication of application: **09.03.2011**
(21) Application number: 10009272.5
(22) Date of filing: 07.09.2010
(51) Int. Cl.: B60G 7/04, B60G 9/00, B60G 11/46, B60G 17/005

(54) **A suspension limiting device**

(30) Priority: 07.09.2009 GB 0915472
(71) Applicant: Schmitz Cargobull AG, 48341 Altenberge (DE)
(72) Inventor: Skinner, Derek, Brancepeth, Durham DH7 8EN (GB)
(74) Representative: Cohausz & Florack

(57) **Abstract**

A suspension limiting device 116 for use with a trailer 108, the device having restriction means 118, 120 for limiting the extent with which a wheel axel 102 is able to move on a suspension system 100 relative to a body of a trailer. The restriction means being adapted to move between a driving configuration and a loading configuration in which the restriction means allows the wheel axel to move to a first, and a second position respectively, relative to the body of the trailer, the second position being further away from the body of the trailer than the first position.

## Description

The present invention relates to a suspension limiting device, and relates particularly but not exclusively, to a suspension limiting device for use with a trailer.

"Dock Creep" is a term which is used to refer to the forward movement of a trailer away from a loading bay which may occur whilst it is loaded with cargo. The terms "trailer creep" and "dock walk" are also used. In reported instances of dock creep, trailers have been observed to either progressively or dramatically move away from a loading bay in conjunction with a lowering of the trailer floor level. To bridge the inevitable gap between the loading bay and the trailer a bridging plate, a metal plate hinged to the edge of the loading bay, is commonly used. Dock creep reduces, and in extreme cases negates, the overlap created by a bridging plate between a loading bay and the floor of a trailer. This results in an unsafe condition, requiring the loading to be stopped and the dangerous situation remedied, normally by repositioning the trailer.

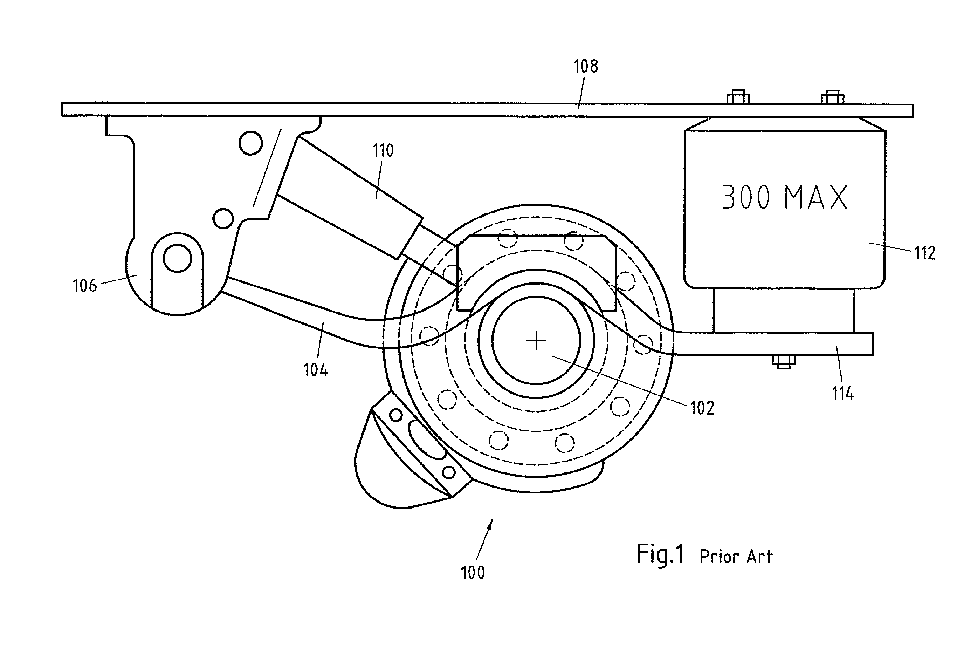

Dock creep is generally a result of the use of trailing arm air suspension systems commonly used on trailers (figure 1). In such suspension systems 100 a wheel axel 102 is pivotally connected via a trailing arm 104 to a mounting portion 106 which protrudes from the bottom of a trailer 108. The extent to which the wheel axel 102 may pivot about the mounting portion 106 is restricted by a piston 110 which is connected between the wheel axel 102 and the mounting portion 106. The movement of the wheel axel 102 relative to the trailer 108 is also restricted by an air bag 112 which engages a flange portion 114 protruding from the wheel axel 102.

The air pressure in the air bag 112 of such a suspension system 100 on an unladen trailer 108 is sufficient to support the weight of an empty trailer. However, as loading starts and a fork lift truck carrying cargo is rolled onto the trailer 108, the weight at the rear of the trailer 108 is increased, this weight being multiplied at the axles 102 due to the rear overhang. The only way that the suspension pressure is controlled is by a ride height control valve (not shown) that is positioned over the axles of the trailer. The unladen pressure in the suspension is insufficient to support the increased load which results in the ride height (trailer height above the ground) quickly reducing, causing the onset of dock creep and compression of the air in airbag 112 to a pressure that can support the load.

The ride height control valve then starts to introduce more high pressure air into the airbag 112 to compensate for the reduction in trailer height. Ride height control valves are relatively slow in responding to the sudden increase in weight caused by loading and cannot give the necessary response time to retain a constant height. However, by the time the ride height control valve has started to respond, the fork lift truck may have travelled further forward into the trailer, beyond the trailer axles 102. At this point the weight is reduced on the suspension 102 which causes the trailer to move upwards and the ride height control valve to empty what air it has introduced into the airbag 112 so as to maintain a constant ride height.

The fork lift truck after depositing its cargo in the front of the trailer then again returns to the rear of the trailer, again causing an increase in the weight over the axles 102 just when the ride height control valve is reducing the suspension pressure. This causes another reduction in the height of the trailer and dock creep to be observed.

The forward movement of a trailer experienced during dock creep is a result of the reduction in ride height incurred on loading. The reduction in ride height causes the trailing arm 104 of suspension system 100 to pivot about the mounting portion 106 commonly by up to five degrees. This causes the wheels (not shown) attached to the axel 102, and which are locked by the brakes, to also rotate by the same amount thereby driving the trailer 108 forward such that it rolls forward. Because the diameter of the trailer wheel is very large a rotation of five degrees results in movement of around 30 to 50 mm.

Current solutions to the problem of dock creep include:
a) Fixing a mechanical coupling between the loading bay and the trailer. This can be done by connecting such a coupling to a special feature of the trailer such as a rear king pin or using a common feature of trailers such as the rear bumper or axle. However, this solution either requires a special trailer or one where the common feature is in a predetermined position preferably with extra strengthening.
b) Chocking the trailer wheels, although this has little effect.
c) Removing all air from the suspension. This works well but may present the trailer at too low a height relative to the loading bay which creates other problems.
d) Fully inflating the suspension. This has the same problems as (c) above in addition to the problem of the potentially needing to "top-up" the suspension pressure with increasing load.
e) Placing a trestle, or lowering additional landing legs, at the rear of the trailer. Problems with this solution include manual handling issues together with safety in confined and busy loading environment. There is also the danger of the trailer being driven-off with the device still in place.

In addition to the problems associated with the above solutions, they all also require some form of additional time and/or effort when presenting the trailer to a loading bay.

Preferred embodiments of the present invention seek to overcome the above disadvantages of the prior art.

According to the present invention there is provided a suspension limiting device for use with a trailer, the device comprising restriction means for limiting the extent with which a wheel axel is able to move on a suspension system relative to a body of a trailer, wherein the restriction means is adapted to move between:
a driving configuration, in which the restriction means allows the wheel axel to move to a first position relative to the body of the trailer; and
a loading configuration, in which the restriction means allows the wheel axel to move to a second position relative to the body of the trailer which is further away from the body, thereby limiting the movement of the axel.

By restricting the range of movement of a wheel axel with respect to the body of a trailer, the dock creep resulting from such movement can be prevented or reduced to the point of being negligible. Also, by providing restriction means which are able to move between first and second positions, provides the advantage of being able to prevent dock creep while a trailer is being loaded at the same time as not reducing the performance of suspension of the trailer while it is driving.

In a preferred embodiment the restriction means comprises at least one support portion which is adapted to move relative to the body.

By providing a support portion which is able to move relative to the body of a trailer allows it to move between first and second positions providing the advantage of being able to prevent dock creep while a trailer is being loaded at the same time as not reducing the performance of suspension of the trailer while it is driving.

In another preferred embodiment at least one support portion is adapted to rotate relative to the body.

By providing support portions which rotate relative to the body of a trailer provides the advantage of enabling such support portions to move both quickly and easily between first and second positions.

In a further preferred embodiment at least one support portion is adapted to move under the force of gravity into the loading configuration.

This provides the advantage that the range of movement of a trailer wheel axel is automatically restricted when the trailer is unattached from a towing vehicle thereby minimizing dock creep.

In a further preferred embodiment at least one support portion is adapted to be moved relative to the body using compressed air.

By moving support portions using compressed air removes the requirement for a person to manipulate such support portions to move them into a required position. This provides the advantage of removing the risk of injury to a person when moving the support portions between different positions.

In another preferred embodiment at least one support portion is adapted to be moved from the loading configuration into the driving configuration using compressed air.

This provides the advantage of maximising the efficiency of a trailer's suspension system when it is connected to a towing vehicle having a compressed air system.

In a preferred embodiment the device has biasing means for biasing the wheel axel away from the body.

In another preferred embodiment the biasing means is at least one of a piston, spring or an air bag.

Preferred embodiments of the invention will now be described, by way of example only and not in any limitative sense, with reference to the accompanying drawings in which:-
Figure 1 is a schematic view of a trailing arm air suspension system of the prior art;
Figure 2 is a schematic view of a suspension limiting device of the present invention in a first configuration;
Figure 3 is a schematic view of the suspension limiting device of Figure 2 in a second configuration;
Figure 4 is a schematic view of the suspension limiting device in figure 2 in the suspension system of figure 1;
Figure 5 is a schematic view of the suspension limiting device in figure 3 in the suspension system of figure 1;

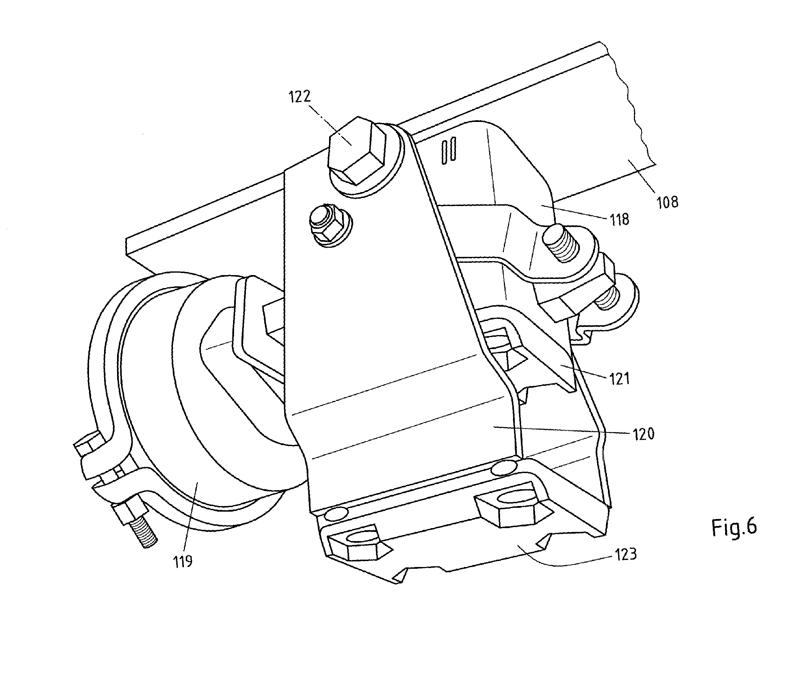

Figure 6 is another schematic view of the suspension limiting device in figure 2; and

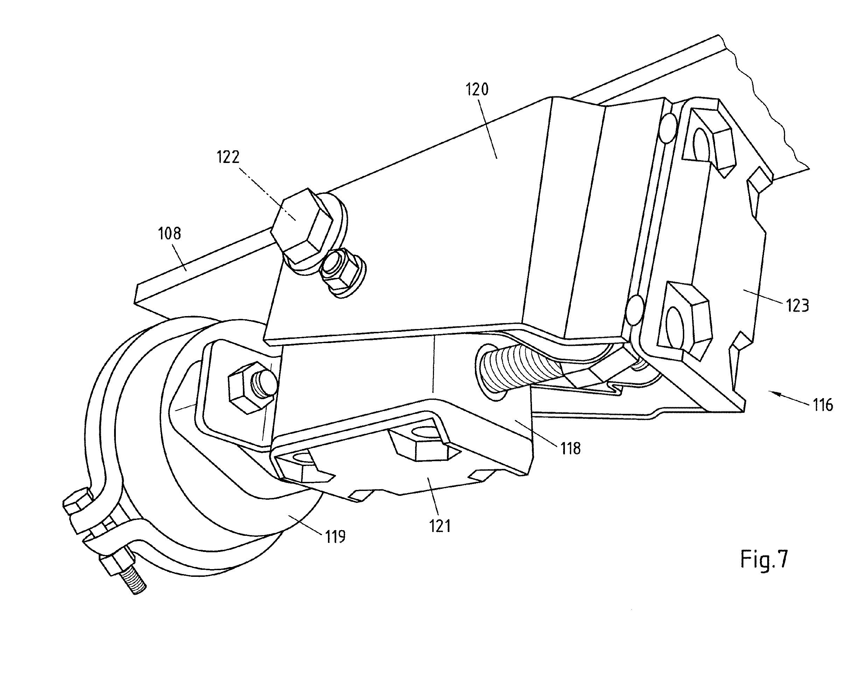

Figure 7 is another schematic view of the suspension limiting device in figure 3.

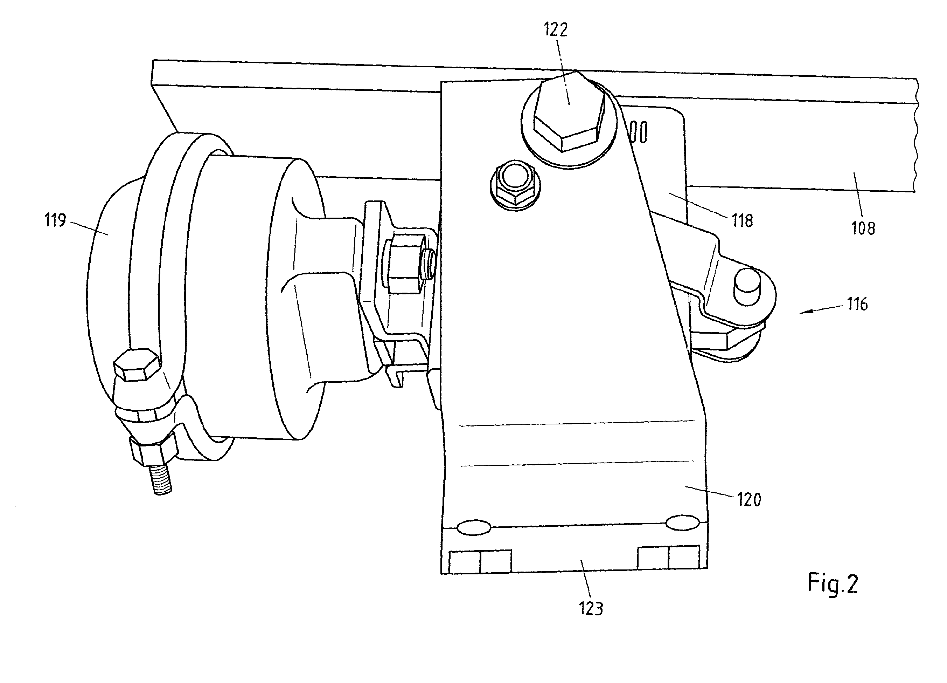

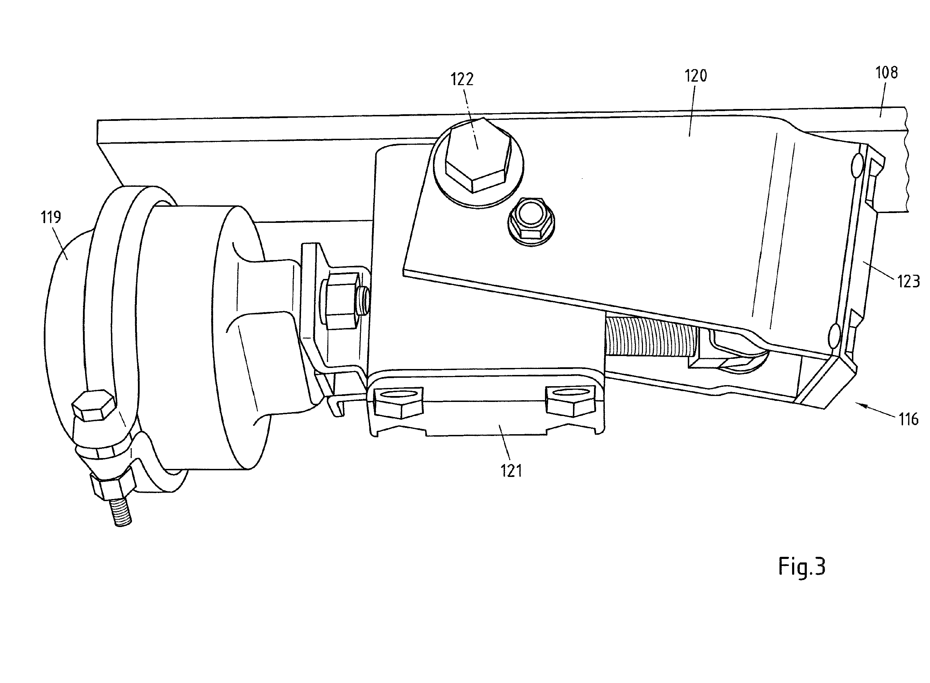

With reference to figures 2 to 5, a suspension limiting device 116, herein after referred to as the compression limiter, for use with a trailer 108, has first and second support portions 118, 120 for limiting the extent with which a wheel axel 102 is able to move on a suspension system 100 relative to the body of the trailer 108. The first support portion 118 is adapted to be fixed to the underside of the body of the trailer 108 and the second support portion 120 is pivotally connected to the first support portion 118 about an axis 122. The compression limiter 116 is attached to the main side beam of such a trailer's chassis.

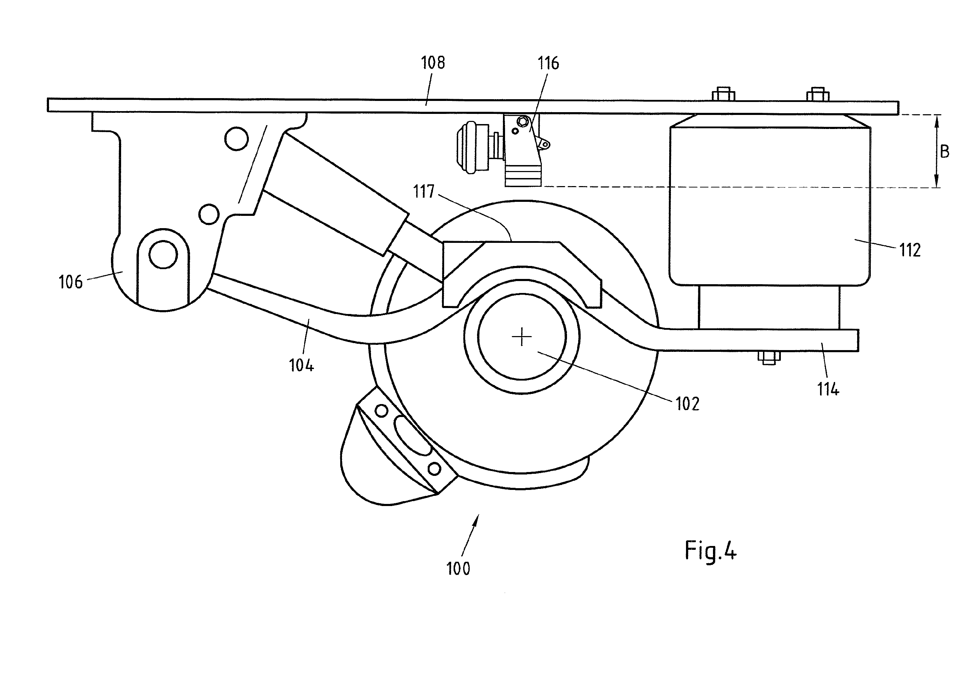

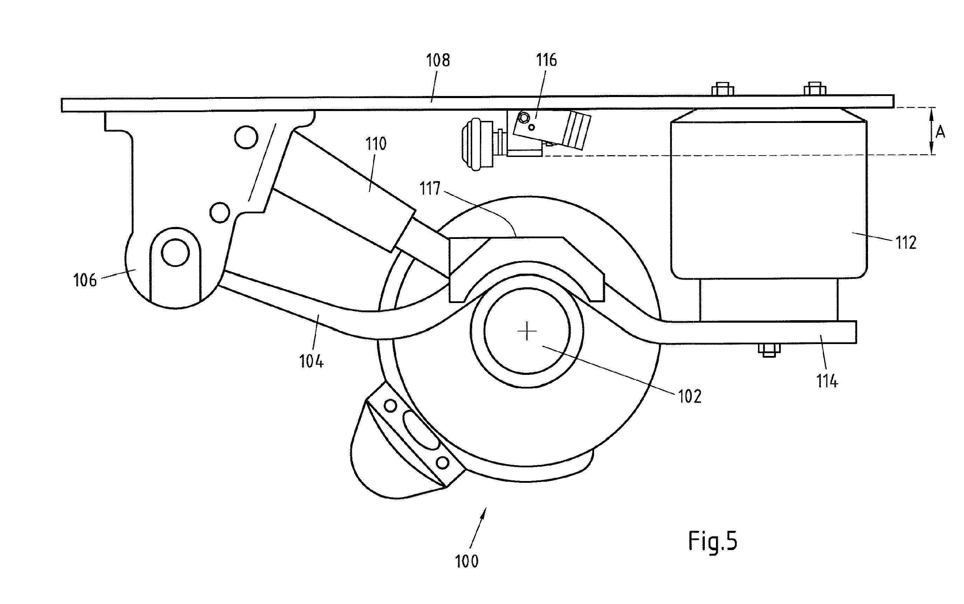

The first and second support portions 118, 120 are adapted to pivot relative to one another. The second support portion 120 falls into a loading configuration (see figure 4) under the force of gravity. Compressed air, which enters the compression limiter 116 through gas intake 119, may be used to move the second support portion 120 from the loading configuration (see figure 4) into a driving configuration (see figure 5). As an alternative the pivoting movement could be controlled by hydraulics or an electric motor. However, compressed air is preferably used because the majority of trailers already have a self contained compressed air system on board for controlling the brakes and suspension of the trailer.

The compression limiter 116 restricts the movement of the wheel axel 102 relative to the body of the trailer 108 by engaging a stopping surface 117 on the suspension system 100 attached to the wheel axel 102. In particular, a first stopping surface engaging portion 121 on the first support portion 118 is adapted to engage the stopping surface 117 of the suspension system 100 when the compression limiter 116 is in the driving configuration as in figure 5. However, a second stopping surface engaging portion 123 on the second support portion 120 is adapted to engage the stopping surface 117 of the suspension system 100 when the compression limiter is in the loading configuration as in figure 4.

In the driving configuration (figure 5), stopping surface 117 engages the first stopping surface engaging portion 121 on the compression limiter 116 when it moves to within a first distance (A) of the trailer body 108 and is prevented from moving any closer. In the loading configuration (figure 4) the stopping surface 117 engages second stopping surface engaging portion 123 of the compression limiter 116 when it moves to within a second distance (B), greater than the first distance (A), of the trailer body 108 and is prevented from moving any closer. The range of movement of the wheel axel 102 relative to the body of the trailer 108 is thereby limited when the compression limiter 116 is in the loading configuration.

When a trailer is in use and is being towed, by a vehicle such as a lorry, compressed air is pumped into the compression limiter 116 so that it is forced into the driving configuration (figure 5). In this configuration the wheel axel 102 is able to move closer to the body of the trailer 108 before its motion is restricted by the compression limiter 116. This allows maximum movement of the wheel axel on the suspension system 100 so that maximum efficiency of the suspension system 100 is utilised.

When the trailer 108 is to be loaded, compressed air is stopped from being pumped into the compression limiter 116 such that the second support portion 120 is able to fall under the force of gravity into the loading configuration (figure 5). A spring may also be used to assist such movement into the loading configuration. The vehicle towing the trailer 108 is now able to drive away from the trailer. In the loading configuration the distance within which the wheel axel 102 is able to move relative to the trailer body 108 is restricted relative to that in the driving configuration (figure 5). This limits any changes occurring in the height of the trailer body 108 during a loading process which subsequently limits the extent of any dock creep arising from such movement.

It will be appreciated by persons skilled in the art that the above embodiments have been described by way of example only and not in any limitative sense, and that various alterations and modifications are possible without departure from the scope of the invention as defined by the appended claims.

The complete content of the priority application 0915472.5 filed in the United Kingdom on 7. September 2009 is hereby incorporated by reference.

## Claims

1. A suspension limiting device for use with a trailer, the device comprising restriction means for limiting the extent with which a wheel axel is able to move on a suspension system relative to a body of a trailer, wherein said restriction means is adapted to move between:
a driving configuration, in which said restriction means allows said wheel axel to move to a first position relative to said body of said trailer; and
a loading configuration, in which said restriction means allows said wheel axel to move to a second position relative to said body of said trailer which is further away from said body, thereby limiting the movement of the axel.

2. The device of claim 1, wherein said restriction means comprises at least one support portion which is adapted to move relative to said body.

3. The device of claim 2, wherein at least one said support portion is adapted to rotate relative to said body.

4. The device of claim 2 or 3, wherein at least one said support portion is adapted to move under the force of gravity into said loading configuration.

5. The device of any one of claims claim 2 to 4, wherein at least one said support portion is adapted to be moved relative to said body using compressed air.

6. The device of claim 5, wherein at least one said support portion is adapted to be moved from said loading configuration into said driving configuration using compressed air.

7. The device of any one of the preceding claims, further comprising biasing means for biasing said wheel axel away from said body.

8. The device of claim 7, wherein said biasing means is at least one of a piston, spring or an air bag.

9. A suspension limiting device for use with a trailer as substantially herein before described with reference to the accompanying drawings in figures 2 to 7.
